(19) Europäisches Patentamt
European Patent Office
Office européen des brevets

(11) **EP 4 683 409 A1**

(12) **EUROPEAN PATENT APPLICATION**
published in accordance with Art. 153(4) EPC

(43) Date of publication:
**21.01.2026 Bulletin 2026/04**

(21) Application number: **24796021.4**

(22) Date of filing: **22.04.2024**

(51) International Patent Classification (IPC):
**H04W 72/0446** (2023.01)

(52) Cooperative Patent Classification (CPC):
**H04L 5/00; H04W 4/40; H04W 72/0446;
H04W 72/0453**

(86) International application number:
**PCT/CN2024/089153**

(87) International publication number:
**WO 2024/222640 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.04.2023 CN 202310472361**

(71) Applicant: **Huawei Technologies Co., Ltd.
Shenzhen, Guangdong 518129 (CN)**

(72) Inventors:
• **SHEN, Zhongyi
Shenzhen, Guangdong 518129 (CN)**
• **HAN, Jing
Shenzhen, Guangdong 518129 (CN)**
• **ZHANG, Li
Shenzhen, Guangdong 518129 (CN)**
• **LI, Hong
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **CELL ACTIVATION METHOD, APPARATUS AND SYSTEM**

(57) This application provides a cell activation method, an apparatus, and a system, and is applied to the field of communication technologies. The cell activation method provided in this application includes: receiving first information, where the first information indicates to activate a plurality of secondary cells, the plurality of secondary cells include one FR2 secondary cell and N1 FR1 secondary cells that need to be searched, and N1 is a positive integer; and determining, based on the first information, a time domain resource used for searching the FR2 secondary cell. According to the cell activation method provided in this application, in a scenario in which the plurality of to-be-activated secondary cells include the FR2 secondary cell that needs to be searched, a terminal device may determine, based on the first information, the corresponding time domain resource used for searching the FR2 secondary cell, resolving a problem of how to search the FR2 secondary cell that needs to be searched in a scenario in which a plurality of SCells are simultaneously activated.

FIG. 4

**Description**

This application claims priority to Chinese Patent Application No. 202310472361.5, filed with the China National Intellectual Property Administration on April 25, 2023 and entitled "CELL ACTIVATION METHOD, APPARATUS, AND SYSTEM", which is incorporated herein by reference in its entirety.

**TECHNICAL FIELD**

This application relates to the field of communication technologies, and in particular, to a cell activation method, an apparatus, and a system.

**BACKGROUND**

In a wireless communication system, a base station may increase a system capacity by configuring carrier aggregation (carrier aggregation, CA), including a primary carrier (primary carrier, PCC) and a secondary carrier (secondary carrier, SCC). A cell corresponding to the PCC is referred to as a primary cell (PCell), and a cell corresponding to the SCC is referred to as a secondary cell (SCell).

To enable the SCell to have a data receiving and sending capability, a network side sends media access control (media access control, MAC) signaling to a terminal device, to trigger the terminal device to perform an activation process to activate the SCell. The activation process includes a plurality of steps such as cell search, automatic gain control (automatic gain control, AGC), and timing. In addition, when the terminal device supports CA of a plurality of SCells, to quickly complete activation of the plurality of SCells, the activation of the plurality of SCells may be simultaneously triggered by using one piece of MAC signaling. Due to a limitation of a capability of the terminal device, during the activation of the plurality of SCells, it cannot be assumed that activation of each SCell is independent, and some steps in the activation process need to be completed in serial, for example, cell search. In other words, if the plurality of SCells are activated, cell search in the activation process needs to be completed in turn for SCells that need to be searched.

However, for some SCells that satisfy a specific condition, the terminal device may skip cell search. In addition, a condition of skipping cell search on a frequency range 1 (frequency range 1, FR1) SCell is different from a condition of skipping cell search on a frequency range 2 (frequency range 2, FR2) SCell. Currently, in a scenario in which a plurality of SCells are activated simultaneously, it is assumed in the standard that an SCell that needs to be searched exists in an FR1, but the FR2 SCell always satisfies the condition of skipping cell search, in other words, no to-be-activated SCell in an FR2 needs to be searched.

However, a special SCell is further considered in the standard: an SCell configured with a physical uplink control channel (physical uplink control channel, PUCCH), which is referred to as a PUCCH SCell for short below. In an actual scenario, it is unlikely that an FR2 PUCCH SCell satisfies the foregoing condition of skipping cell search on the FR2 SCell. In other words, during activation of the FR2 PUCCH SCell together with another SCell, cell search also needs to be performed.

As described above, for the scenario in which the plurality of SCells are activated simultaneously, in the existing standard, it considers only an FR1 SCell that needs to be searched and an FR2 SCell that does not need to be searched, but does not consider an FR2 PUCCH SCell that needs to be searched. Therefore, in the scenario in which the plurality of SCells are activated simultaneously, how to search the FR2 PUCCH SCell is a problem to be urgently resolved.

**SUMMARY**

Embodiments of this application provide a cell activation method, an apparatus, and a system, to resolve a problem of how to search an FR2 PUCCH SCell in a scenario in which a plurality of SCells are activated simultaneously.

To achieve the foregoing objectives, the following technical solutions are used in embodiments of this application.

According to a first aspect, a cell activation method is provided. The method may be performed by a terminal device, or may be performed by a module (for example, a processor, a chip, or a chip system) used in the terminal device. The following uses an example in which the terminal device performs the method for description. The method includes: The terminal device receives first information, where the first information indicates to activate a plurality of secondary cells, the plurality of secondary cells include one FR2 secondary cell and N1 FR1 secondary cells that need to be searched, and N1 is a positive integer. The terminal device determines, based on the first information, a time domain resource used for searching the FR2 secondary cell.

According to the cell activation method provided in embodiments of this application, in a scenario in which a plurality of to-be-activated secondary cells include an FR2 secondary cell that needs to be searched, the terminal device may determine, based on the first information, a time domain resource corresponding to the FR2 secondary cell that is used for searching, to fill a blank that is not considered of how to search FR2 secondary cell that needs to be searched in a scenario in which a plurality of SCells are simultaneously activated.

With reference to the first aspect, in a possible design, the method further includes: The terminal device receives second information, where the second information indicates a secondary cell to be activated preferentially. The terminal device activates the FR2 secondary cell and the N1 FR1 secondary cells based on the first information and the second information.

Based on the solution, the terminal device may activate the FR2 secondary cell and the N1 FR1 secondary cells based on the secondary cell to be activated preferentially indicated by the second information, to provide a solution of activating the FR2 secondary cell in a scenario in which a plurality of to-be-activated secondary cells include the FR2 secondary cell that needs to be searched.

With reference to the first aspect, in a possible design, duration needed for activating the FR2 secondary cell when the second information indicates that the secondary cell to be activated preferentially is the FR2 secondary cell is first duration, and the first duration is duration needed for activating a single secondary cell when the to-be-activated secondary cell is the single secondary cell.

Based on the solution, the second information may indicate that the FR2 secondary cell is preferentially activated, and specify activation duration of the FR2 secondary cell when the FR2 secondary cell is preferentially activated.

With reference to the first aspect, in a possible design, duration needed for activating the FR2 secondary cell includes when the second information indicates that the secondary cell to be activated preferentially is an FR1 cell first duration and second duration, the first duration is duration needed for activating a single secondary cell when the to-be-activated secondary cell is the single secondary cell, the second duration is related to duration needed for searching N2 FR1 secondary cells, and N2 is a positive integer less than or equal to N1.

Based on the solution, the second information may indicate that the FR1 secondary cells are preferentially activated, and specify activation duration of the FR2 secondary cells when the FR1 secondary cells are preferentially activated.

With reference to the first aspect, in a possible design, that the second information indicates the secondary cell to be activated preferentially includes: The second information indicates priorities respectively corresponding to the FR2 secondary cell and the FR1 secondary cells. Activating the FR2 secondary cell and the FR1 secondary cells based on the first information and the second information includes: performing cell search on the FR2 secondary cell and the N1 FR1 secondary cells based on a sequence of the priorities indicated by the second information.

Based on the solution, the second information may indicate priorities corresponding to secondary cells that need to be searched, so that the terminal device may determine a search sequence based on the sequence of the priorities indicated by the second information, and search the secondary cells that need to be searched.

According to a second aspect, a cell activation method is provided. The method may be performed by a network device, or may be performed by a module (for example, a processor, a chip, or a chip system) used in the network device. The following uses an example in which the network device performs the method for description. The method includes: The network device sends first information, where the first information indicates to activate a plurality of secondary cells, the plurality of secondary cells include one FR2 secondary cell and N1 FR1 secondary cells that need to be searched, and N1 is a positive integer; and the first information is further used for determining a time domain resource used for searching the FR2 secondary cell.

With reference to the second aspect, in a possible design, the method further includes:
The network device sends second information, where the second information indicates a secondary cell to be activated preferentially.

Based on the solution, the network device may indicate the secondary cell to be activated preferentially by using the second information, to provide a solution of activating the FR2 secondary cell in a scenario in which a plurality of to-be-activated secondary cells include the FR2 secondary cell that needs to be searched.

With reference to the second aspect, in a possible design, duration needed for activating the FR2 secondary cell when the second information indicates that the secondary cell to be activated preferentially is the FR2 secondary cell is first duration, and the first duration is duration needed for activating a single secondary cell when the to-be-activated secondary cell is the single secondary cell.

Based on the solution, the second information may indicate that the FR2 secondary cell is preferentially activated, and specify activation duration of the FR2 secondary cell when the FR2 secondary cell is preferentially activated.

With reference to the second aspect, in a possible design, duration needed for activating the FR2 secondary cell includes when the second information indicates that the secondary cell to be activated preferentially is an FR1 cell first duration and second duration, the first duration is duration needed for activating a single secondary cell when the to-be-activated secondary cell is the single secondary cell, the second duration is related to duration needed for searching N2 FR1 secondary cells, and N2 is a positive integer less than or equal to N1.

Based on the solution, the second information may indicate that the FR1 secondary cells are preferentially activated, and specify activation duration of the FR2 secondary cell when the FR1 secondary cells are preferentially activated.

With reference to the second aspect, in a possible design, that the second information indicates the secondary cell to be activated preferentially includes: The second information indicates priorities respectively corresponding to the FR2 secondary cell and the FR1 secondary cells.

Based on the solution, the second information may indicate priorities corresponding to secondary cells that need to be searched, to further indicate a search sequence of the secondary cells that need to be searched.

With reference to the first aspect or the second aspect, in a possible design, the duration needed for activating the FR2 secondary cell includes first duration and second duration, the first duration is duration needed for activating the FR2 secondary cell when a to-be-activated secondary cell is one FR2 secondary cell, the second duration is related to duration needed for searching the N2 FR1 secondary cells, and N2 is a positive integer less than or equal to N1.

Based on the solution, in a scenario in which the plurality of to-be-activated secondary cells include the FR2 secondary cell that needs to be searched, activation duration of the FR2 secondary cell may be specified.

With reference to the first aspect or the second aspect, in a possible design, the second duration is duration needed for completing search on the N2 FR1 secondary cells; or the second duration is duration needed for completing search on an FR1 secondary cell with longest duration needed for completing search in the N2 FR1 secondary cells.

Based on the solution, two manners of determining the second duration are provided.

With reference to the first aspect or the second aspect, in a possible design, N2 is less than or equal to a first preset threshold, or the second duration is less than or equal to a second preset threshold.

Based on the solution, the activation duration of the FR2 secondary cell may be limited by using the second duration.

With reference to the first aspect or the second aspect, in a possible design, measurement windows SMTCs of the FR1 secondary cells overlap an SMTC of the FR2 secondary cell in time domain.

Based on the solution, a scenario to which the activation duration of the FR2 secondary cell includes the first duration and the second duration is applicable is provided: The measurement windows SMTCs of the FR1 secondary cell overlap the SMTCs of the FR2 secondary cell in time domain.

With reference to the first aspect or the second aspect, in a possible design, the duration needed for activating the FR2 secondary cell is a first duration, and the first duration is duration needed for activating the FR2 secondary cell when a to-be-activated secondary cell is one FR2 secondary cell.

Based on the solution, in a scenario in which the plurality of to-be-activated secondary cells include the FR2 secondary cell that needs to be searched, activation duration of the FR2 secondary cell may be specified.

With reference to the first aspect or the second aspect, in a possible design, the duration needed for activating the FR1 secondary cells includes third duration and fourth duration, where the third duration is duration needed for activating the FR1 secondary cells when to-be-activated secondary cells are the N1 FR1 secondary cells, and the fourth duration is related to duration needed for searching the FR2 secondary cell.

Based on the solution, in a scenario in which the plurality of to-be-activated secondary cells include the FR2 secondary cell that needs to be searched, activation duration of the FR1 secondary cells may be specified.

With reference to the first aspect or the second aspect, in a possible design, the fourth duration is less than or equal to a third preset threshold.

Based on the solution, the activation duration of the FR1 secondary cells may be limited by limiting the fourth duration.

With reference to the first aspect or the second aspect, in a possible design, the third preset threshold is a value of preset duration, or the third preset threshold is duration corresponding to a preset quantity of SMTCs of the FR2 secondary cell.

Based on the solution, two implementations of the third preset threshold are provided.

With reference to the first aspect or the second aspect, in a possible design, none of SMTCs of the N1 FR1 secondary cells overlaps an SMTC of the FR2 secondary cell in time domain.

Based on the solution, a scenario in which activation duration of the FR2 secondary cell is the first duration is applicable is provided: None of SMTCs of the N1 FR1 secondary cells overlaps the SMTCs of the FR2 secondary cell in time domain.

With reference to the first aspect or the second aspect, in a possible design, duration needed for activating the FR1 secondary cells is third duration, and the third duration is duration needed for activating the FR1 secondary cells when to-be-activated secondary cells are the N1 FR1 secondary cells.

Based on the solution, when none of SMTCs of the N1 FR1 secondary cells overlaps the SMTCs of the FR2 secondary cell in time domain, the activation duration of the FR1 secondary cells is the third duration.

With reference to the first aspect or the second aspect, in a possible design, duration needed for activating the FR2 secondary cell when an SMTC of the FR2 secondary cell partially overlaps SMTCs of the FR1 secondary cells is determined based on an SMTC that is of the FR2 secondary cell and that overlaps none of SMTCs of the N1 FR1 secondary cells.

Based on the solution, a method for determining activation duration of an FR2 secondary cell that is applicable to a case in which an SMTC of the FR2 secondary cell partially overlaps SMTCs of the FR1 secondary cellss may be provided.

With reference to the first aspect or the second aspect, in a possible design, the FR2 secondary cell is an FR2 secondary cell configured with a physical uplink control channel.

According to a third aspect, a communication apparatus is provided, and is configured to implement the method in the first aspect. The communication apparatus may be a terminal device, or may be a module like a chip used in the terminal device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible design, the communication apparatus includes a processing module and a transceiver module. The transceiver module is configured to receive first information, where the first information indicates to activate a plurality of secondary cells, the plurality of secondary cells include one FR2 secondary cell and N1 FR1 secondary cells that need to be searched, and N1 is a positive integer. The processing module is configured to determine, based on the first information, a time domain resource used for searching the FR2 secondary cell.

With reference to the third aspect, in a possible design, the transceiver module is further configured to receive second information, where the second information indicates a secondary cell to be activated preferentially. The processing module is further configured to activate the FR2 secondary cell and the N1 FR1 secondary cells based on the first information and the second information.

With reference to the third aspect, in a possible design, duration needed for activating the FR2 secondary cell when the second information indicates that the secondary cell to be activated preferentially is the FR2 secondary cell is first duration, and the first duration is duration needed for activating a single secondary cell when the to-be-activated secondary cell is the single secondary cell.

With reference to the third aspect, in a possible design, duration needed for activating the FR2 secondary cell includes when the second information indicates that the secondary cell to be activated preferentially is an FR1 cell first duration and second duration, the first duration is duration needed for activating a single secondary cell when the to-be-activated secondary cell is the single secondary cell, the second duration is related to duration needed for searching N2 FR1 secondary cells, and N2 is a positive integer less than or equal to N1.

With reference to the third aspect, in a possible design, that the second information indicates the secondary cell to be activated preferentially includes: The second information indicates priorities respectively corresponding to the FR2 secondary cell and the FR1 secondary cells. The processing module is specifically configured to perform cell search on the FR2 secondary cell and the N1 FR1 secondary cells based on a sequence of the priorities indicated by the second information.

According to a fourth aspect, a communication apparatus is provided, and is configured to implement the method in the second aspect. The communication apparatus may be a network device, or may be a module like a chip used in the network device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible design, the communication apparatus includes a transceiver module. The transceiver module is configured to send first information, where the first information indicates to activate a plurality of secondary cells, the plurality of secondary cells include one FR2 secondary cell and N1 FR1 secondary cells that need to be searched, and N1 is a positive integer; and the first information is used for determining a time domain resource used for searching the FR2 secondary cell.

With reference to the fourth aspect, in a possible design, a sending module is configured to send second information, where the second information indicates a secondary cell to be activated preferentially.

With reference to the fourth aspect, in a possible design, duration needed for activating the FR2 secondary cell when the second information indicates that the secondary cell to be activated preferentially is the FR2 secondary cell is first duration, and the first duration is duration needed for activating a single secondary cell when the to-be-activated secondary cell is the single secondary cell.

With reference to the fourth aspect, in a possible design, duration needed for activating the FR2 secondary cell includes when the second information indicates that the secondary cell to be activated preferentially is an FR1 cell first duration and second duration, the first duration is duration needed for activating a single secondary cell when the to-be-activated secondary cell is the single secondary cell, the second duration is related to duration needed for searching N2 FR1 secondary cells, and N2 is a positive integer less than or equal to N1.

With reference to the fourth aspect, in a possible design, that the second information indicates the secondary cell to be activated preferentially includes: The second information indicates priorities respectively corresponding to the FR2 secondary cell and the FR1 secondary cells.

With reference to the third aspect or the fourth aspect, in a possible design, the duration needed for activating the FR2 secondary cell includes first duration and second duration, the first duration is duration needed for activating the FR2 secondary cell when a to-be-activated secondary cell is one FR2 secondary cell, the second duration is related to duration needed for searching the N2 FR1 secondary cells, and N2 is a positive integer less than or equal to N1.

With reference to the third aspect or the fourth aspect, in a possible design, the second duration is duration needed for completing search on the N2 FR1 secondary cells; or the second duration is duration needed for completing search on an FR1 secondary cell with longest duration needed for completing search in the N2 FR1 secondary cells.

With reference to the third aspect or the fourth aspect, in a possible design, N2 is less than or equal to a first preset threshold, or the second duration is less than or equal to a second preset threshold.

With reference to the third aspect or the fourth aspect, in a possible design, measurement window SMTCs of the FR1 secondary cells overlap an SMTC of the FR2 secondary cell in time domain.

With reference to the third aspect or the fourth aspect, in a possible design, the duration needed for activating the FR2 secondary cell is a first duration, and the first duration is duration needed for activating the FR2 secondary cell when a to-be-activated secondary cell is one FR2 secondary cell.

With reference to the third aspect or the fourth aspect, in a possible design, the duration needed for activating the FR1 secondary cells includes third duration and fourth duration, where the third duration is duration needed for activating the FR1 secondary cells when to-be-activated secondary cells are the N1 FR1 secondary cells, and the fourth duration is related to duration needed for searching the FR2 secondary cell.

With reference to the third aspect or the fourth aspect, in a possible design, the fourth duration is less than or equal to a third preset threshold.

With reference to the third aspect or the fourth aspect, in a possible design, the third preset threshold is a value of preset duration, or the third preset threshold is duration corresponding to a preset quantity of SMTCs of the FR2 secondary cell.

With reference to the third aspect or the fourth aspect, in a possible design, none of SMTCs of the N1 FR1 secondary cells overlaps an SMTC of the FR2 secondary cell in time domain.

With reference to the third aspect or the fourth aspect, in a possible design, duration needed for activating the FR1 secondary cells is third duration, and the third duration is duration needed for activating the FR1 secondary cells when to-be-activated secondary cells are the N1 FR1 secondary cells.

With reference to the third aspect or the fourth aspect, in a possible design, duration needed for activating the FR2 secondary cell when an SMTC of the FR2 secondary cell partially overlaps SMTCs of the FR1 secondary cells is determined based on an SMTC that is of the FR2 secondary cell and that overlaps none of the SMTCs of the N1 FR1 secondary cells.

With reference to the third aspect or the fourth aspect, in a possible design, the FR2 secondary cell is an FR2 secondary cell configured with a physical uplink control channel.

According to a fifth aspect, a communication apparatus is provided, and includes a processor. The processor is configured to execute instructions stored in a memory. When the processor executes the instructions, the communication apparatus is enabled to perform the method in any one of the foregoing aspects. The communication apparatus may be the terminal device or the module (for example, a chip) used in the terminal device in the first aspect. Alternatively, the communication apparatus may be the network device or the module (for example, a chip) used in the network device in the second aspect.

In a possible design, the communication apparatus further includes a memory, and the memory is configured to store computer instructions. Optionally, the processor and the memory are integrated together, or the processor and the memory are separately disposed.

In a possible design, the memory is coupled to the processor, and is located outside the communication apparatus.

According to a sixth aspect, a communication apparatus is provided, and includes a processor and an interface circuit. The interface circuit is configured to communicate with a module other than the communication apparatus. The processor is configured to perform the method in any one of the foregoing aspects by using a logic circuit or by running a computer program or computer instructions. The communication apparatus may be the terminal device or the module (for example, a chip) used in the terminal device in the first aspect. Alternatively, the communication apparatus may be the network device or the module (for example, a chip) used in the network device in the second aspect.

Alternatively, the interface circuit may be a code/data read/write interface circuit, and the interface circuit is configured to receive computer-executable instructions (where the computer-executable instructions are stored in a memory, and may be read from the memory directly or through another component) and transmit the computer-executable instructions to the processor, so that the processor runs the computer-executable instructions to perform the method in any one of the foregoing aspects.

In some possible designs, the communication apparatus may be a chip or a chip system.

According to a seventh aspect, this application provides a computer-readable storage medium. The computer-readable storage medium stores instructions. When the instructions are run on a computer, the computer is enabled to perform the method performed by the terminal device in the first aspect or the possible designs of the first aspect, or the computer is enabled to perform the method performed by the network device in the second aspect or the possible designs of the second aspect.

According to an eighth aspect, this application provides a computer program product including instructions. When the instructions are run on a computer, the computer is enabled to perform the method performed by the terminal device in the first aspect or the possible designs of the first aspect, or the computer is enabled to perform the method performed by the network device in the second aspect or the possible designs of the second aspect.

According to a ninth aspect, a communication apparatus is provided (for example, the communication apparatus may be a chip or a chip system). The communication apparatus includes a processor, configured to implement the functions in any one of the foregoing aspects. In a possible design, the communication apparatus further includes a memory, and the memory is configured to store necessary program instructions and data. When being a chip system, the communication apparatus may include a chip, or may include a chip and another discrete component.

According to a tenth aspect, a communication system is provided. The communication system includes a terminal device and a network device. The terminal device is configured to implement the method in the first aspect, and the network device is configured to implement the method in the second aspect.

For technical effects of any design manner in the third aspect to the tenth aspect, refer to technical effects of different design manners in the first aspect and the second aspect. Details are not described herein again.

## BRIEF DESCRIPTION OF DRAWINGS

FIG. 1 is a diagram of a search sequence of a plurality of FR1 secondary cells;
FIG. 2 is a diagram of a structure of a communication system according to an embodiment of this application;
FIG. 3 is a diagram of a structure of a communication apparatus according to an embodiment of this application;
FIG. 4 is a diagram of interaction of a cell activation method according to an embodiment of this application;
FIG. 5 is a diagram of SSBs and SMTCs according to an embodiment of this application;
FIG. 6 is a diagram of non-overlapping of SMTCs according to an embodiment of this application;
FIG. 7 is a diagram of partial overlapping of SMTCs according to an embodiment of this application;
FIG. 8 is a diagram of a structure of a communication apparatus according to an embodiment of this application; and
FIG. 9 is a diagram of a structure of another communication apparatus according to an embodiment of this application.

## DESCRIPTION OF EMBODIMENTS

For ease of understanding of the technical solutions in embodiments of this application, related technologies of this application are first briefly described below.

1. Cell activation

To enable an SCell to have a data receiving and sending capability, a network side sends MAC signaling to a terminal device, to trigger the terminal device to perform an activation process to activate the SCell. A process of activating the SCell includes a plurality of steps, such as cell search, AGC, and timing. During the activation process, duration needed for a same step to be performed on SCells in different frequency bands may be different. For example, when cell search is performed on a cell, for an FR1 SCell, one SSB needs to be measured (synchronization signal and physical broadcast channel block, synchronization signal block) to complete the cell search. Because an FR2 SCell is at a high frequency, a quantity of reference signals that need to be measured is multiplied compared with that for the FR1 SCell. Assuming that a sweeping coefficient is 8 (where beam sweeping is performed in eight directions), for the FR2 SCell, eight SSBs need to be measured to complete the cell search.

When the terminal device supports CA of a plurality of SCells, to quickly complete activation of the plurality of SCells, the plurality of SCells may be simultaneously activated by using one piece of MAC signaling. However, due to a limitation of a capability of the terminal device, when the plurality of SCells are activated, it cannot be assumed that activation of each SCell is independent, and some steps in the activation process need to be completed in serial. For example, in the standard, it is currently assumed that cell search processes need to be processed in serial. Therefore, for SCells that need to be searched, the searches during the activation process need to be completed in turn, which is specifically represented in the protocol as follows:

$$T_{activation\_time\_multiple\_scells}=T_{FirstSSB\_MAX\_multiple\_scells}+T_{SMTC\_MAX\_multiple\_scells}+T_{rs}*N_1+T_{rs}+5\ ms \qquad \text{Formula (1)}$$

$T_{activation\_time\_multiple\_scells}$ represents duration needed for activating a specific SCell when the plurality of SCells are activated. For FR1 intra-band CA, $T_{SMTC\_MAX\_multiple\_scells}$ may represent a longest SMTC period of to-be-activated SCells and activated serving cells that are in a same frequency band. Cell-level reference signals of the activated serving cell and the to-be-activated SCell may be obtained in a same slot. Alternatively, for FR1 inter-band CA, $T_{SMTC\_MAX\_multiple\_scells}$ may represent a longest SMTC period of to-be-activated SCells in a same frequency band. Alternatively, for an FR2, $T_{SMTC\_MAX\_multiple\_scells}$ may represent a longest SMTC period of to-be-activated SCells and activated serving cells that are in a same frequency band. $T_{FirstSSB\_MAX\_multiple\_scells}$ represents time at which a first complete SSB burst (burst) indicated by the SMTC ends after a slot $n+\dfrac{T_{HARQ}+3ms}{slot\ length}$ (where $T_{HARQ}$ represents timing between downlink data transmission and acknowledgment in a hybrid automatic repeat request (hybrid automatic repeat request, HARQ) process). For FR1 intra-band CA, a to-be-activated cell and an activated cell transmit SSBs in a same slot, or for an FR2, a to-be-activated cell and an activated cell transmit SSBs in a same slot. $T_{rs}$ is duration needed for searching an SSB. N1 is a quantity of SCells that need to be searched in turn and in serial. For example, if the quantity of SCells that need to be searched in SCells to be activated simultaneously is 4, N1=4.

It can be learned from the $T_{activation\_time\_multiple\_scells}$ relational expression provided in the protocol that, when duration needed for activating a specific SCell in the plurality of SCells is defined in the protocol, assuming that the SCell is a last SCell on which cell search is performed, $T_{rs}*N_1$ may be understood as a delay of waiting for completing cell search on other SCells during the SCell activation. However, it should be noted that not all to-be-activated SCells are calculated in N1. A search process may be skipped for some SCells that satisfy a specific condition. In addition, a condition of skipping cell search on an FR1 SCell is different from a condition of skipping cell search on an FR2 SCell. For the FR2 SCell, if there is an activated cell or a known to-be-activated cell in a same frequency band (band), the terminal device may skip cell search when activating the SCell.

Currently, in a scenario in which a plurality of SCells are activated simultaneously, it is assumed in the standard that an SCell that needs to be searched exists in an FR1, but the FR2 SCell always satisfies the condition of skipping cell search, in other words, no to-be-activated SCell in the FR2 needs to be searched. In other words, in the $T_{activation\_time\_multiple\_scells}$ relational expression provided in the standard, N1 is actually a quantity of FR1 SCells that need to be searched in turn and in serial, and a scenario in which an FR2 SCell that needs to be searched exist in a plurality of to-be-activated SCells is not considered.

However, a special SCell is considered in the standard: an SCell configured with a PUCCH, which is referred to as a PUCCH SCell for short below. The PUCCH SCell may carry an uplink channel of another SCell. Therefore, the PUCCH SCell is a more important SCell. In addition, it is currently specified that for SCells belonging to a same PUCCH group (PUCCH group), the PUCCH SCell needs to be activated first. A concept of the PUCCH group is as follows: If a plurality of SCells perform uplink sending through a PUCCH of the PUCCH SCell, the plurality of SCells and the PUCCH SCell are as one PUCCH group.

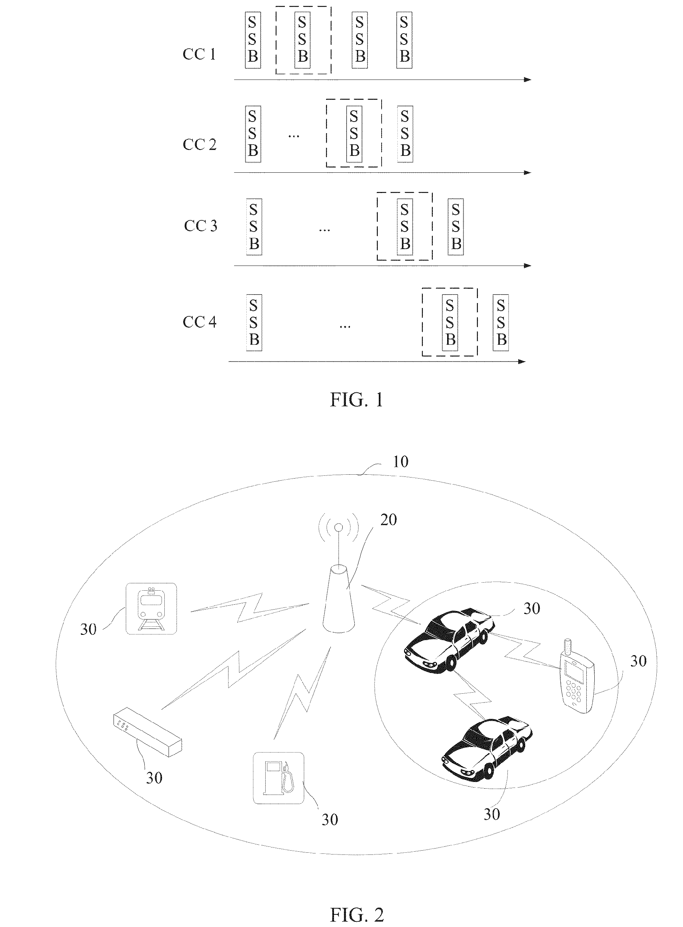

Therefore, in an actual scenario, it is unlikely that an FR2 PUCCH SCell satisfies the foregoing condition of skipping cell search on the FR2 SCell. In other words, during activation of the FR2 PUCCH SCell together with another SCell, cell search also needs to be performed. However, as described above, for the scenario in which the plurality of SCells are activated simultaneously, in the existing standard, it considers only an FR1 SCell that needs to be searched and an FR2 SCell that does not need to be searched, but does not consider an FR2 SCell that needs to be searched. Therefore, when the FR2 SCell that needs to be searched, for example, the FR2 PUCCH SCell, and the FR1 SCell are activated simultaneously, how to search the FR2 SCell that needs to be searched is not specified. For example, as shown in FIG. 1, it is assumed that an FR2 PUCCH SCell and four FR1 SCells are activated simultaneously, and for the four FR1 SCells, SSBs may be searched in turn in a sequence of component carrier (component carrier, CC) 1-CC 2-CC 3-CC 4. An SSB in a dashed line box in FIG. 1 represents an SSB found in the secondary cell, while when for the FR2 PUCCH SCell, an SSB should be searched is not clear.

In view of the problem, embodiments of this application provide a cell activation method, to provide cell search solution for an FR2 SCell that needs to be searched in a plurality of to-be-activated SCells.

The following describes the technical solutions in embodiments of this application with reference to accompanying drawings in embodiments of this application. In descriptions of this application, unless otherwise specified, "/" indicates that associated objects are in an "or" relationship. For example, A/B may represent A or B. In this application, "and/or" describes only an association relationship between associated objects and represents that three relationships may exist.

For example, A and/or B may indicate: Only A exists, both A and B exist, and only B exists, where A and B may be singular or plural. In addition, in the descriptions of this application, "a plurality of" means two or more unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used for representing giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The following describes the technical solutions in embodiments of this application with reference to accompanying drawings in embodiments of this application. In descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used for representing giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The technical solutions in embodiments of this application are applicable to various communication systems. The communication system may be a 3rd generation partnership project (3rd generation partnership project, 3GPP) communication system, for example, a long term evolution (long term evolution, LTE) system, a 5G communication system, an IoT system, an NTN system, a vehicle-to-everything (vehicle-to-everything, V2X) system, a device-to-device (device-to-device, D2D) communication system, a machine-to-machine (machine-to-machine, M2M) communication system, or another future-oriented similar new system, for example, a sixth-generation (sixth-generation, 6G) system. This is not specifically limited in embodiments of this application. In addition, the terms "system" and "network" may be interchangeable with each other.

FIG. 2 shows a communication system 10 according to an embodiment of this application. The communication system 10 includes a network device 20 and a terminal device 30. The network device 20 may communicate with the terminal device 30 in a wireless manner.

It may be understood that FIG. 2 is merely a diagram, and does not constitute a limitation on a quantity of network devices 20 or terminal devices 30 in the communication system 10. The communication system 10 may include at least one network device 20 and at least one terminal device 30.

Optionally, different network devices 20 may communicate with each other. Optionally, different terminal devices 30 may communicate with each other. The network device 20 and/or the terminal device 30 may be at fixed positions, or may be movable.

An example in which the network device 20 shown in FIG. 2 interacts with any terminal device 30 is used. In the cell activation method provided in this embodiment of this application, the network device 20 sends first information to the terminal device 30. Correspondingly, the terminal device 30 receives the first information from the network device 20. The first information indicates to activate a plurality of secondary cells. The plurality of to-be-activated secondary cells include one FR2 secondary cell and N1 FR1 secondary cells that need to be searched, and N1 is a positive integer. The terminal device 30 determines, based on the first information, a time domain resource used for searching the FR2 secondary cell. Specific implementations and technical effects of the solution are described in detail in a subsequent method embodiment. Details are not described herein.

Optionally, the network device 20 and the terminal device 30 in this embodiment of this application may be deployed on land, including indoor, outdoor, handheld, or vehicle-mounted devices; may be deployed on the water; or may be deployed on airplanes, balloons and satellites in the air. An application scenario of the network device 20 and the terminal device 30 is not limited in this embodiment of this application.

Optionally, the network device 20 and the terminal device 30 in this embodiment of this application may communicate with each other by using a licensed spectrum, may communicate with each other by using an unlicensed spectrum, or may communicate with each other by using both the licensed spectrum and the unlicensed spectrum. The network device and the terminal device may communicate with each other through a spectrum below 6 gigahertz (gigahertz, GHz), may communicate with each other through a spectrum above 6 GHz, or may communicate with each other through both a spectrum below 6 GHz and a spectrum above 6 GHz. A spectrum resource used between the network device 20 and the terminal device 30 is not limited in this embodiment of this application.

Optionally, the network device in this embodiment of this application is a device that connects the terminal device to a wireless network. The network device in this embodiment of this application may include base stations (base stations) in various forms. For example, the network device may be a macro base station, a micro base station (also referred to as a small cell), a relay station, an access point, a transmission point (transmission point, TP), an evolved NodeB (evolved NodeB, eNodeB), a transmission reception point (transmission reception point, TRP), a next generation NodeB (next generation NodeB, gNB) in a 5G mobile communication system, a device that implements a base station function in an evolved communication system later than 5G, a mobile switching center, or a device that performs a base station function in device-to-device (Device-to-Device, D2D), vehicle-to-everything (vehicle-to-everything, V2X), or machine-to-machine (machine-to-machine, M2M) communication; may be a network device in an NTN communication system, to be specific, may be deployed on a high-altitude platform or a satellite; or may be a module or a unit that performs some functions of a base station, for example, may be a central unit (central unit, CU) or a distributed unit (distributed unit, DU) in a cloud radio access network (cloud radio access network, C-RAN) system. A specific technology and a specific device form that are used for the network device are not limited in this embodiment of this application. All or some of functions of the network device may alternatively be implemented by using a software function running on hardware, or may be implemented by using a virtualization function instantiated on a platform (for example, a cloud platform). In this application, the network device is a radio access network (radio access network, RAN) device, unless otherwise specified.

Optionally, the terminal device in this embodiment of this application may be a device with a wireless transceiver function, and may also be referred to as a terminal (terminal). The terminal device may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. Alternatively, the terminal device may be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, a personal digital assistant (personal digital assistant, PDA), a handheld device with a wireless communication function, a computing device or another processing device connected to a wireless modem, a vehicle-mounted device, a communication device mounted on a high-altitude aircraft, a wearable device, an uncrewed aerial vehicle, a robot, a smart point of sale (point of sale, POS) machine, a machine type communication device, a terminal device in D2D, a vehicle-mounted terminal device in V2X, an on-board unit (on-board unit, OBU), a vehicle-mounted communication terminal (telematics box, T-box), a vehicle or roadside unit (roadside unit, RSU), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form that are used for the terminal device are not limited in this embodiment of this application. For example, the terminal device may alternatively be a chip or a module. All or some of functions of the terminal device may alternatively be implemented by using a software function running on hardware, or may be implemented by using a virtualization function instantiated on a platform (for example, a cloud platform).

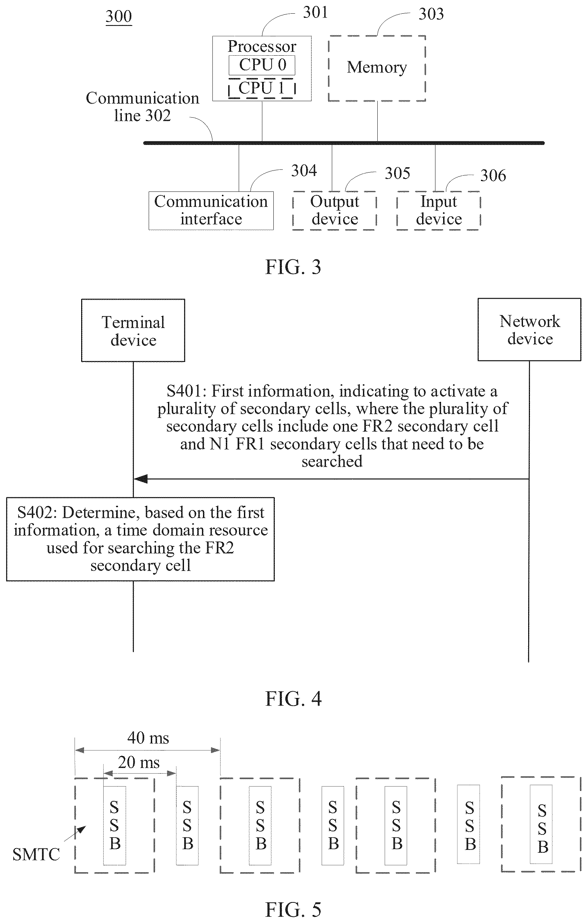

Optionally, the network device 20 or the terminal device 30 may use a structure of a communication apparatus 300 shown in FIG. 3. As shown in FIG. 3, the communication apparatus 300 includes a processor 301, a communication line 302, and at least one communication interface (where FIG. 3 is described merely by using an example in which the communication apparatus 300 includes a communication interface 304). Optionally, the communication apparatus 300 may further include a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solution of this application.

The communication line 302 may include a path for transmitting information between the foregoing components.

The communication interface 304 is applicable to any apparatus such as a transceiver, and is configured to communicate with another device or a communication network such as the Ethernet, a radio access network (radio access network, RAN), or a wireless local area network (wireless local area network, WLAN).

The memory 303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blue-ray disc, and the like), a magnetic disk storage medium or another magnetic storage device, or any other medium that can be used to carry or store expected program code in an instruction form or a data structure form and that can be accessed by a computer, but is not limited thereto. The memory may exist independently, and is connected to the processor through the communication line 302. The memory may alternatively be integrated with the processor.

The memory 303 is configured to store computer-executable instructions for executing the solutions in this application under control of the processor 301. The processor 301 is configured to execute the computer-executable instructions stored in the memory 303, to implement methods provided in the following embodiments of this application.

Optionally, the computer-executable instructions in embodiments of this application may also be referred to as application program code or computer program code. This is not specifically limited in embodiments of this application.

During specific implementation, in an embodiment, the processor 301 may include one or more CPUs such as a CPU 0 and a CPU 1 in FIG. 3.

During specific implementation, in an embodiment, the communication apparatus 300 may include a plurality of processors, and each processor may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, a projector (projector), or the like. The input device 306 communicates with the processor 301, and may receive user input in a plurality of manners. For example, the input device 306 may be a mouse, a keyboard, a touchscreen device, a sensor device, or the like.

It may be understood that the structure shown in FIG. 3 does not constitute a specific limitation on the communication apparatus 300. For example, in some other embodiments of this application, the communication apparatus 300 may include more or fewer components than those shown in the figure, or some components are combined, or some components are split, or different component arrangements may be used. The components shown in the figure may be implemented by hardware, software, or a combination of software and hardware.

With reference to FIG. 1 to FIG. 3, the following describes, by using an example in which the network device 20 and any terminal device 30 shown in FIG. 2 interact with each other, the cell activation method provided in embodiments of this application.

It should be noted that names of messages between network elements, names of parameters in the messages, or the like in the following embodiments of this application are merely examples, and there may be other names in a specific implementation. This is not specifically limited in embodiments of this application.

FIG. 4 shows a cell activation method according to an embodiment of this application. In FIG. 4, the method is described by using an example in which a network device and a terminal device are execution entities of the illustrative interaction. However, the execution entities of the illustrative interaction are not limited in this application. For example, the network device in FIG. 4 may alternatively be a module, for example, a chip, a chip system, or a processor, used in the network device, or may be a logical node, a logical module, or software that can implement all or some functions of the network device. The terminal device in FIG. 4 may alternatively be a module, for example, a chip, a chip system, or a processor, used in the terminal device, or may be a logical node, a logical module, or software that can implement all or some functions of the terminal device. The cell activation method includes steps S401 and S402.

S401: The network device sends first information to the terminal device. The terminal device receives the first information from the network device. The first information indicates to activate a plurality of secondary cells, the plurality of secondary cells include one FR2 secondary cell and N1 FR1 secondary cells that need to be searched, and N1 is a positive integer.

S402: The terminal device determines, based on the first information, a time domain resource used for searching the FR2 secondary cell.

It should be noted that in this embodiment of this application, "sending information to the terminal device" or a related diagram in the accompanying drawings may be understood as that a destination end of the information is the terminal, and may include directly or indirectly sending information to the terminal device; and "receiving information of the terminal device" or "receiving information from the terminal device", or a related diagram in the accompanying drawings may be understood as that a source end of the information is the terminal device, and may include directly or indirectly receiving information from the terminal device. Necessary processing, such as a format change, may be performed on information between a source end and a destination end for sending the information. However, the destination end can understand valid information from the source end. A similar expression in this application may be understood similarly, for example, expressions such as "sending information to the network device", "receiving information of the network device", or "receiving information from the network device". Details are not described herein again.

Further, with reference to the foregoing description of "sending information to the terminal device", in this embodiment of this application, the step of "the network device sends information to the terminal device" may be understood as that a source end of the information is the network device, and a destination end of the information is the terminal device. The network device may directly send information to the terminal device, or a logical module of the network device may (indirectly) send information to the terminal by using another logical module of the network device. A similar expression in this application may be understood similarly, and details are not described herein again.

The following describes steps S401 and S402 in detail.

In S401, the first information may indicate the terminal device to activate the plurality of to-be-activated secondary cells. The plurality of to-be-activated secondary cells include one FR2 SCell that needs to be searched and at least one FR1 SCell that needs to be searched. In this embodiment of this application, a quantity of FR1 SCells that need to be searched in the plurality of to-be-activated secondary cells is denoted as N1.

Optionally, the plurality of to-be-activated secondary cells may further include one or more secondary cells that do not need to be searched.

In this embodiment of this application, a secondary cell that needs to be searched is a secondary cell for which cell search step needs to be completed during an activation process of the secondary cell. The terminal device may determine, depending on whether a to-be-activated secondary cell satisfies a condition of skipping a search process, whether the to-be-activated secondary cell needs to be searched. If the to-be-activated secondary cell satisfies the condition, the to-be-activated secondary cell does not need to be searched. If the to-be-activated secondary cell does not satisfy the condition, the to-be-activated secondary cell needs to be searched.

Optionally, the condition of skipping a search process may include at least one of the following.

Condition 1: The to-be-activated secondary cell is known, where "known" means that the terminal device measures and reports the to-be-activated secondary cell before the to-be-activated secondary cell is activated.

Condition 2: The to-be-activated secondary cell is an FR1 SCell, and is contiguous to an activated cell in a same frequency band, or the to-be-activated FR1 SCell is contiguous to a known to-be-activated cell in a same frequency band.

Condition 3: The to-be-activated secondary cell is an FR2 SCell, and there is an activated cell or a known to-be-activated cell in a same frequency band.

For example, an FR2 SCell that needs to be searched may be an FR2 PUCCH SCell.

Optionally, the plurality of to-be-activated secondary cells indicated by the first information may further include at least one FR2 SCell and/or FR1 SCell that does/do not need to be searched.

Optionally, the first information may be carried in MAC signaling.

After receiving the first information, the terminal device performs S402 to determine, based on the first information, the time domain resource used for searching the FR2 SCell.

Further, the terminal device may determine, based on the time domain resource used for searching the FR2 SCell, duration needed for activating the FR2 SCell.

Optionally, the terminal device may further determine, based on the first information, a time domain resource used for searching a specific FR1 SCell in the N1 FR1 SCells. Further, the terminal device may further determine duration needed for activating the FR1 SCell.

Optionally, after receiving the first information, the terminal device may further start to activate the plurality of to-be-activated secondary cells (where the plurality of to-be-activated secondary cells that are indicated by the first information to be activated are referred to as a plurality of secondary cells for short below) under an indication of the first information.

The following describes S402 in detail.

Considering that current cell search processes are processed in serial, in a possible implementation of S402, the terminal device may determine a search sequence of secondary cells (including the FR2 SCell and the N1 FR1 SCells) that need to be searched in the plurality of secondary cells, and determine, based on the search sequence, the time domain resource used for searching the FR2 SCell.

In this embodiment of this application, the search sequence of the plurality of secondary cells may be classified into, based on frequency bands corresponding to the secondary cells, preferentially searching the FR2 SCell, or preferentially searching the FR1 SCell. The following separately describes two different scenarios: preferentially searching the FR2 SCell and preferentially searching the FR1 SCell.

It should be noted that, in this embodiment of this application, "preferentially activate" and "preferentially search" are the same concept, and may be replaced with each other. In the following embodiments, if an expression similar to "preferentially activate a xx cell" or "a secondary cell to be activated preferentially is a xx cell" appears, it indicates to preferentially search the xx cell in an activation process, and does not indicate another step included in the activation process. The xx cell may also be preferentially processed.

Scenario 1: Search the FR1 SCell preferentially.

In Scenario 1, the terminal device may search the FR2 SCell after searching some or all of the N1 FR1 SCells. In this embodiment of this application, a quantity of FR1 SCells that are searched before the FR2 SCell is searched may be denoted as N2, and N2 may also be understood as a quantity of FR1 SCells that are preferentially searched.

It may be understood that if the terminal device searches the FR2 SCell after all of the N1 FR1 SCells are searched, N2=N1. If the terminal device searches the FR2 SCell after searching some of the N1 FR1 SCells, N2 is less than N1, and N2 is a quantity of FR1 SCells that are preferentially searched in the N1 FR1 SCells. In other words, in Scenario 1, N2 may be a positive integer less than or equal to N1.

In Scenario 1, the terminal device starts to search the FR2 SCell after searching the N2 FR1 SCells. In other words, the time domain resource used for searching the FR2 SCell is after a time domain resource used for searching the N2 FR1 SCells. Therefore, in Scenario 1, duration needed for activating the FR2 SCell by the terminal device needs to be increased, compared with duration (for ease of description, referred to as first duration below) needed for activating the FR2 SCell when the to-be-activated secondary cell is the FR2 SCell, by a delay of waiting by the terminal device for completing searches on the N2 FR1 SCells. It may be understood that the delay of waiting by the terminal device for completing searches on the N2 FR1 SCells is related to duration needed for searching the N2 FR1 secondary cells (for ease of description, referred to as second duration below).

In other words, the duration needed for activating the FR2 SCell by the terminal device in Scenario 1 includes the first duration and the second duration. In some embodiments, "include" means that the duration needed for activating the FR2 SCell by the terminal device in Scenario 1 is duration obtained by adding the first duration and the second duration.

For example, the first duration may be denoted as $T_{activation\_time}$. The second duration may be denoted as $T_{FR1\_N2}$.

Further, the duration needed for activating the FR2 SCell by the terminal device in Scenario 1 may satisfy the following relationship:

$$T_{activation\_time\_multiple\_scells} = T_{activation\_time} + T_{FR1\_N2} \qquad \text{Formula (2)}$$

$T_{activation\_time\_multiple\_scells}$ represents the duration needed for activating the FR2 SCell by the terminal device

Optionally, in this embodiment of this application, the second duration may be duration needed for completing search on the N2 FR1 SCells. For example, it is assumed that four FR1 SCells and one FR2 PUCCH SCell are activated, and the second duration may be duration needed for completing search on all of the four FR1 SCells.

Alternatively, the second duration may be duration needed for completing search on an FR1 SCell with longest duration needed for completing search in the N2 FR1 SCells. It may be understood that, currently, when duration needed for activating a specific SCell in a plurality of SCells is defined, it is assumed that the SCell is a last SCell on which cell search is performed. Therefore, in the N2 FR1 SCells, when a search is completed on the FR1 SCell with the longest duration needed for completing search, a search has also been completed on another FR1 SCell. For example, the second duration may be denoted as $T_{FR1\_N2} = Max(T1)$, where T1 is duration needed for completing search on any one of the N2 FR1 SCells. Max(T1) represents duration needed for completing search on an FR1 SCell with longest duration needed for completing search in the N2 FR1 SCells. In a possible implementation, $T_1$ may satisfy the following relational expression:

$$T_1 = T_{FirstSSB\_MAX\_multiple\_scells} + T_{SMTC\_MAX\_multiple\_scells} + T_{rs} * N_2 \qquad \text{Formula (3)}$$

For details about $T_{FirstSSB\_MAX\_multiple\_scells}$, $T_{SMTC\_MAX\_multiple\_scells}$, and $T_{rs}$, refer to the foregoing descriptions of Formula (1).

Because the duration needed for activating the FR2 SCell by the terminal device includes the first duration and the second duration, it may be understood that longer second duration indicates longer duration needed for activating the FR2 SCell by the terminal device. However, in some cases, the duration needed for activating the FR2 SCell should not be excessively long. For example, if the FR2 SCell is an FR2 PUCCH SCell that carries PUCCH transmission of all cells in a same PUCCH group, excessively long activation duration affects transmission of another cell in the same PUCCH group. Optionally, in Scenario 1, the second duration may be limited, to limit the duration needed for activating the FR2 SCell by the terminal device.

In a possible implementation, a value of N2 may be limited to limit the second duration. In the implementation, the terminal device may preset a first preset threshold. The threshold may also be referred to as a maximum quantity of preferred FR1 SCells. The quantity (that is, N2) of FR1 SCells that are preferentially searched by the terminal device cannot exceed the first preset threshold. For example, it is assumed that four FR1 SCells and one FR2 PUCCH SCell are activated, and the first preset threshold preset by the terminal device is 3. In this case, the terminal device may preferentially search three FR1 SCells, and then search the FR2 PUCCH SCell after searching the three FR1 SCells.

In another possible implementation, the second duration may be directly limited. In the implementation, the terminal device may preset a second preset threshold. The threshold may also be referred to as maximum waiting duration of the FR2 SCell, and the second duration cannot exceed the second preset threshold.

For example, it is assumed that four FR1 SCells and one FR2 PUCCH SCell are activated, the second preset threshold preset by the terminal device is 3s, and the terminal device determines that it takes 4s to search the four FR1 SCells, which exceeds 3s. In this case, the terminal device cannot preferentially search the four FR1 SCells. The terminal device determines that it takes 3s to search three FR1 SCells, which does not exceed 3s. In this case, the terminal device may preferentially search the three FR1 SCells, and then search the FR2 PUCCH SCell after searching the three FR1 SCells.

Optionally, if duration for searching the FR1 SCells by the terminal device exceeds the second preset threshold, the terminal device needs to stop searching the FR1 SCells, and start to search the FR2 SCell.

For example, it is assumed that four FR1 SCells and one FR2 PUCCH SCell are activated, and the second preset threshold preset by the terminal device is 3s. If when the terminal device searches a third FR1 SCell, duration for searching the first three FR1 SCells by the terminal device exceeds 3s, the terminal device stops searching the third FR1 SCell, and starts to search the FR2 SCell.

Further, in Scenario 1, for the N2 FR1 SCells that are preferentially searched, duration needed for one of the FR1 SCells may be equivalent to duration needed for activating the FR1 SCell when secondary cells that need to be searched in the plurality of to-be-activated secondary cells are the N2 FR1 SCells (in other words, the plurality of to-be-activated secondary cells do not include the FR2 SCell that needs to be searched).

For example, in Scenario 1, duration needed for activating a specific FR1 SCell in the N2 FR1 SCells that are preferentially searched may satisfy the following relationship:

$$T_{activation\_time\_multiple\_scells}=T_{FirstSSB\_MAX\_multiple\_scells}+ T_{SMTC\_MAX\_multiple\_scells}+ T_{rs}*N_2+T_{rs}+5 \text{ ms} \qquad \text{Formula (4)}$$

$T_{activation\_time\_multiple\_scells}$ represents duration needed for activating a specific FR1 SCell in the N2 FR1 SCells that are preferentially searched in Scenario 1. For $T_{FirstSSB\_MAX\_multiple\_scells}$, $T_{SMTC\_MAX\_multiple\_scells}$, and $T_{rs}$, refer to the foregoing descriptions of Formula (1).

It may be understood that, in Scenario 1, if N2 is less than N1, it indicates that one or more FR1 SCells are searched after the FR2 SCell is searched. Duration needed for activating one of one or more FR1 SCells that are searched after the FR2 SCell is searched needs to be increased, compared with duration (for ease of description, referred to as a third duration below) needed for activating the FR1 SCell when secondary cells that need to be searched in the plurality of to-be-activated secondary cells are the N1 FR1 SCells, by a delay of waiting by the terminal device for completing search on the FR2 SCell. It may be understood that the delay of waiting by the terminal device for completing search on the FR2 SCell is related to duration needed for searching the FR2 SCell (for ease of description, the delay of waiting by the terminal device for completing search on the FR2 SCell is referred to as fourth duration below).

In other words, the duration needed for activating the FR1 SCell by the terminal device that is searched after the FR2 SCell is searched in Scenario 1 includes the third duration and the fourth duration. In some embodiments, "include" means that the duration needed for activating the FR1 SCell by the terminal device that is searched after the FR2 SCell is searched in Scenario 1 is duration obtained by adding the third duration and the fourth duration.

For example, the third duration may satisfy the following relationship:

$$T_{activation\_time\_multiple\_scells}=T_{FirstSSB\_MAX\_multiple\_scells}+T_{SMTC\_MAX\_multiple\_scells}+T_{rs}*N_1+T_{rs}+5 \text{ ms} \qquad \text{Formula (5)}$$

$T_{activation\_time\_multiple\_scells}$ represents the third duration. For $T_{FirstSSB\_MAX\_multiple\_scells}$, $T_{SMTC\_MAX\_multiple\_s\text{-}}$

$_{cells}$, and $T_{rs}$, refer to the foregoing descriptions of Formula (1).

For example, the fourth duration may satisfy the following relationship:

$$T_{FR2}=T_{FirstSSB\_MAX}+15*T_{SMTC\_MAX}+8*T_{rs} \qquad \text{Formula (6)}$$

$T_{FR2}$ represents the fourth duration. For FR1 intra-band CA, $T_{SMTC\_MAX}$ may represent a long SMTC period of activated serving cells and to-be-activated SCells. Cell-level reference signals of the activated serving cell and the to-be-activated SCell may be obtained in a same slot. Alternatively, for FR1 inter-band CA, $T_{SMTC\_MAX}$ may represent an SMTC period of to-be-activated SCells. Alternatively, for FR2 intra-band CA, $T_{SMTC\_MAX}$ may represent a long SMTC period of activated serving cells and to-be-activated SCells. Alternatively, for FR2 inter-band CA, $T_{SMTC\_MAX}$ may represent an SMTC period of to-be-activated SCells. $T_{FirstSSB\_MAX}$ represents time at which a first complete SSB burst indicated by the SMTC ends after a slot $n+\frac{T_{HARQ}+3ms}{\text{slot length}}$ (where $T_{HARQ}$ represents timing between downlink data transmission and acknowledgment in a HARQ process). For FR1 intra-band CA, a to-be-activated SCell and an activated serving cell transmit SSB bursts in a same slot. For FR1 inter-band CA, a to-be-activated SCell transmits an SSB burst for the first time. For an FR2, a to-be-activated SCell and an activated serving cell transmit SSB bursts in a same slot. For $T_{rs}$, refer to the foregoing descriptions of Formula (1).

Further, with reference to the relational expression that the third duration and the fourth duration satisfy, for example, in Scenario 1, duration needed for activating one of one or more FR1 SCells that are searched after the FR2 SCell is searched may satisfy the following relationship:

$$T_{activation\_time\_multiple\_scells\_FR1}=T_{activation\_time\_multiple\_scells}+T_{FR2} \qquad \text{Formula (7)}$$

$T_{activation\_time\_multiple\_scells\_FR1}$ represents duration needed for activating one of one or more FR1 SCells that are searched after the FR2 SCell is searched in Scenario 1. $T_{activation\_time\_multiple\_scells}$ represents the third duration. $T_{FR2}$ represents the fourth duration.

Scenario 2: Search the FR2 SCell preferentially.

In Scenario 2, the terminal device may search the N1 FR1 SCells after searching the FR2 SCell. In other words, the FR2 SCell is a first secondary cell that is searched in the plurality of secondary cells. The time domain resource used for searching the FR2 SCell is before a time domain resource used for searching the N1 FR1 SCells. Therefore, duration needed for activating the FR2 SCell by the terminal device in Scenario 2 is equivalent to duration (namely, first duration) needed for activating the FR2 SCell when the to-be-activated secondary cell is the FR2 SCell.

For example, the duration needed for activating the FR2 SCell by the terminal device in Scenario 2 may satisfy the following relationship:

$$T_{activation\_time\_multiple\_scells}=T_{activation\_time} \qquad \text{Formula (8)}$$

$T_{activation\_time\_multiple\_scells}$ represents the duration needed for activating the FR2 SCell by the terminal device in Scenario 2. $T_{activation\_time}$ represents the first duration.

Optionally, in Scenario 2, the terminal device may pre-determine whether the FR2 SCell should be preferentially searched. In a possible implementation, the terminal device may preset a third preset threshold. The threshold may also be referred to as maximum waiting duration of the FR1 SCell. If the terminal device determines that fourth duration exceeds the third preset threshold, the terminal device may determine that the FR2 SCell should not be preferentially searched. If the terminal device determines that the fourth duration does not exceed the third preset threshold, the terminal device may determine to preferentially search the FR2 SCell.

Optionally, the third preset threshold may be a value (or referred to as absolute time) of preset duration. For example, the third preset threshold may be 2s. Alternatively, the third preset threshold may be duration corresponding to a preset quantity of measurement windows (SSB-based measurement timing configurations, SMTCs) of the FR2 SCell. For example, the third preset threshold may be duration corresponding to 10 SMTCs of the FR2 SCell. Alternatively, the third preset threshold may be duration corresponding to a preset quantity of SSBs. For example, the third preset threshold may be duration corresponding to 10 SSBs.

Further, in Scenario 2, because the terminal device starts to search the FR1 SCell after searching the FR2 SCell, duration needed for activating a specific FR1 SCell in the N1 FR1 SCells by the terminal device in Scenario 2 needs to be increased, compared with duration (namely, third duration) needed for activating the FR1 SCell when secondary cells that are needed to be searched in the plurality of to-be-activated secondary cells are the N1 FR1 SCells, by a delay (that is, the fourth duration) of waiting by the terminal device for completing search on the FR2 SCell.

In other words, the duration needed for activating a specific FR1 SCell in the N1 FR1 SCells by the terminal device in Scenario 2 includes the third duration and the fourth duration. In some embodiments, "include" means that the duration needed for activating the FR1 SCell by the terminal device in Scenario 2 is duration obtained by adding the third duration and the fourth duration.

In a possible example, in Scenario 2, for a relational expression that may be satisfied by the third duration, the fourth duration, and the duration needed for activating a specific FR1 SCell in the N1 FR1 SCells, refer to the foregoing descriptions of Formula (5), Formula (6), and Formula (7).

Optionally, in Scenario 1 or Scenario 2, the terminal device may determine whether to preferentially search the FR1 SCell or preferentially search the FR2 SCell. For example, the terminal device may determine, based on a value relationship between the fourth duration and the third preset threshold, whether to preferentially search the FR2 SCell.

Optionally, in addition to determining, by the terminal device, whether to preferentially search the FR1 SCell or preferentially search the FR2 SCell, an embodiment of this application further provides a method for activating, when a network device indicates a secondary cell to be activated preferentially, a plurality of secondary cells by the terminal device under an indication of the network device. The method includes the following steps.

The network device sends second information to the terminal device, where the second information indicates a secondary cell to be activated preferentially.

The terminal device receives the second information from the network device, and activates the plurality of secondary cells based on the first information and the second information.

Optionally, the second information and the first information may be carried in same signaling, for example, both are carried in same MAC signaling. Alternatively, the second information and the first information may be carried in different signaling.

When the second information and the first information are carried in different signaling, the network device may simultaneously send the first information and the second information to the terminal device, or may separately send the first information and the second information to the terminal device at different time points.

In a possible implementation, the second information may indicate whether to preferentially activate the FR2 SCell. That the second information indicates not to preferentially activate the FR2 SCell may also be understood as that the second information indicates to preferentially activate the FR1 SCell.

For example, the second information may indicate, by using a field value, whether to preferentially activate the FR2 SCell. If the field value is 0, it indicates to preferentially activate the FR1 SCell. If the field value is 1, it indicates to preferentially activate the FR2 SCell.

Based on the foregoing descriptions of Scenario 2, when the second information indicates that the secondary cell to be activated preferentially is the FR2 SCell, the terminal device preferentially searches the FR2 SCell, and duration needed for activating the FR2 secondary cell by the terminal device is the first duration.

Based on the foregoing descriptions of Scenario 1, when the second information indicates that the secondary cell to be activated preferentially is the FR1 SCell, the terminal device may preferentially search the N2 FR1 SCells, where N2 is less than or equal to N1, and duration needed for activating the FR2 SCell by the terminal device includes the first duration and second duration.

In another possible implementation, the second information may indicate priorities (that is, priorities respectively corresponding to the FR2 SCell and the N1 FR1 SCells) corresponding to secondary cells that need to be searched in the plurality of to-be-activated secondary cells. A priority corresponding to a secondary cell is a priority of searching the secondary cell during activation of the plurality of secondary cells, and may be referred to as an activation priority or a search priority.

In the implementation, the terminal device may perform cell search on the FR2 SCell and the N1 FR1 SCells based on a sequence of the priorities that are corresponding to the secondary cells and that are indicated by the second information. A higher priority corresponding to a secondary cell indicates to search the secondary cell earlier. A lower priority corresponding to a secondary cell indicates to search the secondary cell later.

For example, it is assumed that the to-be-activated secondary cells indicated by the first information include an SCell 1, an SCell 2, and an SCell 3, where the SCell 2 is an FR2 PUCCH SCell, and the SCell 1 and the SCell 3 are FR1 SCells. Priorities that are respectively corresponding to the SCell 1, the SCell 2, and the SCell 3 and that are indicated by the second information are shown in Table 1. A smaller value corresponding to a priority in Table 1 indicates a higher priority.

Table 1

| Priority | Secondary cell |
|---|---|
| 1 | SCell 2 |
| 2 | SCell 3 |

(continued)

| Priority | Secondary cell |
|---|---|
| 3 | SCell 1 |

As shown in Table 1, a sequence of the priorities corresponding to the SCell 1, the SCell 2, and the SCell 3 is SCell 2-SCell 1-SCell 3, and the terminal device performs cell search based on the sequence of SCell 2-SCell 1-SCell 3 in an activation process.

The foregoing describes an embodiment in which the terminal device preferentially activates the FR1 SCell or preferentially activates the FR1 SCell. It should be noted that the foregoing embodiment in which the terminal device preferentially activates the FR1 SCell or preferentially activates the FR2 SCell is described when the terminal device processes cell search in serial. After one SCell is searched, a next SCell starts to be searched. However, in some cases, the terminal device may search the FR1 SCell and the FR2 SCell in parallel. The following describes a fact that the terminal device determines whether the FR1 SCell and the FR2 SCell can be searched in parallel.

Cell search step in the activation process is based on an SMTC configured by the network device, an SSB is searched in the SMTC, and both the SSB and the SMTC are periodic. For example, as shown in FIG. 5, an SSB period is 20 ms, and an SMTC period is 40 ms. The terminal device may search an SSB in the SMTCs. Therefore, it may be understood that if none of SMTCs corresponding to the FR1 SCell overlaps SMTCs corresponding to the FR2 SCell in time domain or SMTCs corresponding to the FR1 SCell partially overlap (do not completely overlap) SMTCs corresponding to the FR2 SCell in time domain, the terminal device may search the FR1 SCell or the FR2 SCell based on a non-overlapping SMTC. In other words, the terminal device may process cell search processes of the FR1 SCell and the FR2 SCell in parallel. The following provides descriptions with reference to examples.

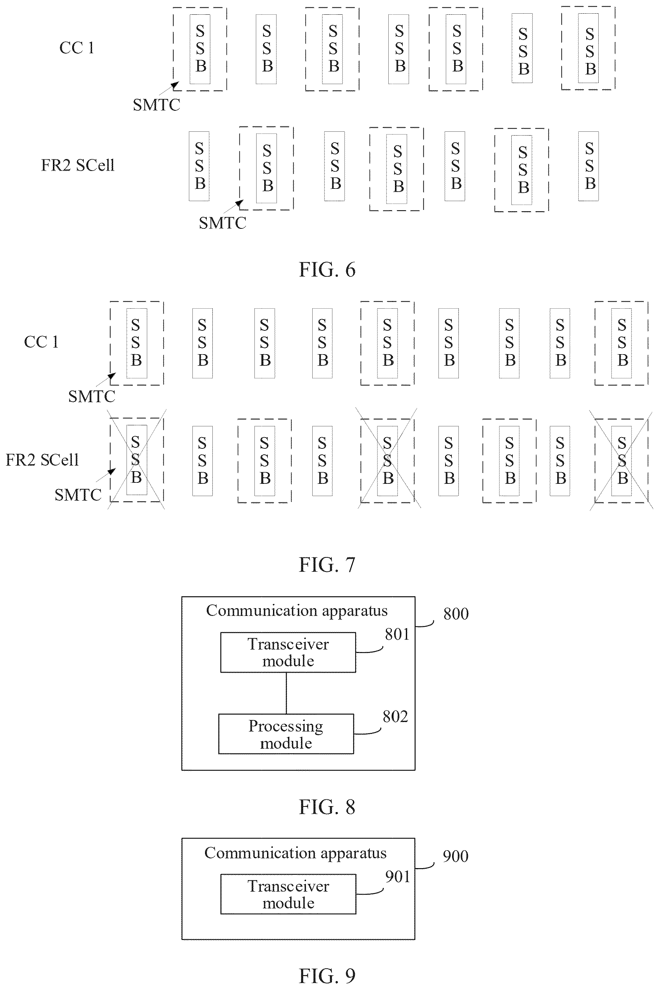

For example, it is assumed that a CC 1 is an FR1 SCell, and both the CC 1 and the FR2 SCell are to-be-activated SCells. SMTCs respectively corresponding to the CC 1 and the FR2 SCell are shown in FIG. 6. None of the SMTCs corresponding to the CC 1 overlaps the SMTCs corresponding to the FR2 SCell. In this case, the terminal device may simultaneously search the CC 1 based on the SMTCs corresponding to the CC 1, and search the CC 1 based on the SMTCs corresponding to the FR2 SCell.

When none of the SMTCs corresponding to the FR1 SCell overlaps the SMTCs corresponding to the FR2 SCell in time domain, the terminal device may simultaneously search the FR1 SCell and the FR2 SCell based on the SMTCs corresponding to the FR1 SCell and the SMTCs corresponding to the FR2 SCell, and does not need to search another SCell after searching the FR2 SCell (or the FR1 SCell). In other words, before searching the FR2 SCell, the terminal device does not need to wait for a delay of completing search on the FR1 SCell, and before searching the FR1 SCell, the terminal device does not need to wait for a delay of completing search on the FR2 SCell. Therefore, when none of SMTCs corresponding to the N1 FR1 SCells overlaps the SMTCs corresponding to the FR2 SCell in time domain, duration needed for activating the FR2 SCell by the terminal device may be the first duration, and duration needed for activating the FR1 SCell by the terminal device may be the third duration.

For another example, it is assumed that SMTCs respectively corresponding to the CC 1 and the FR2 SCell are shown in FIG. 7. In the SMTCs respectively corresponding to the CC 1 and the FR2 SCell, some SMTCs (SMTCs with a cross in FIG. 7) overlap, and some SMTCs do not overlap. In this case, the terminal device may search the CC 1 based on the SMTCs corresponding to the CC 1, and search the FR2 SCell based on an SMTC that is in the SMTCs corresponding to the FR2 SCell and that does not overlap the SMTCs corresponding to the CC 1.

When the SMTCs corresponding to the FR1 SCell partially overlap the SMTCs corresponding to the FR2 SCell in time domain, the terminal device may simultaneously search the FR1 SCell based on the SMTCs corresponding to the FR1 SCell, and search the FR2 SCell based on a part of non-overlapping SMTCs in the SMTCs corresponding to the FR2 SCell. Therefore, in this case, duration needed for activating the FR2 SCell may be determined based on an SMTC that is of the FR2 SCell and that does not overlap all the SMTCs of the N1 FR1 SCells.

For example, in this case, the duration needed for activating the FR2 SCell may satisfy the following relationship:

$$T_{activation\_time\_multiple\_scells}=T_{FirstSSB\_MAX\_multiple\_scells}+T_{SMTC\_MAX\_multiple\_scells}+T_{rs}*N_1+T_{rs}+5 \text{ ms} \qquad \text{Formula (9)}$$

$T_{activation\_time\_multiple\_scells}$ represents the duration needed for activating the FR2 SCell. For $T_{FirstSSB\_MAX\_multiple\_scells}$ and $T_{rs}$, refer to the foregoing descriptions of Formula (1). $T_{SMTC\_MAX\_multiple\_scells}$ represents non-overlapping SMTC periods or intervals between the non-overlapping SMTC periods between the FR2 SCell and the FR1 SCell.

Alternatively, when the SMTCs corresponding to the FR1 SCell partially overlap the SMTCs corresponding to the FR2 SCell in time domain, the terminal device may search the FR2 SCell based on the SMTC corresponding to the FR2 SCell, and search the FR1 SCells based on an SMTC that is in the SMTCs corresponding to the FR1 SCell and that does not overlap the SMTCs corresponding to the FR2 SCell.

Optionally, when the SMTCs corresponding to the FR1 SCell partially overlap the SMTCs corresponding to the FR2 SCell in time domain, that the terminal device searches the FR1 SCell or the FR2 SCell based on an overlapping SMTC may be preconfigured, may be determined by the terminal device (for example, the terminal device presets priorities of the FR1 SCell and the FR2 SCell, and searches an SCell with a higher priority based on the overlapping SMTC), or may be indicated by the network device.

The foregoing describes an embodiment in which the terminal device preferentially searches the FR1 SCell or the FR2 SCell (processes cell search processes in serial), and an embodiment in which the terminal device processes cell search processes in parallel based on a non-overlapping SMTC (where that the cell search processes are processed in parallel based on the non-overlapping SMTC means that cell search processes respectively corresponding to the FR1 SCell and the FR2 SCell may be processed in time division based on the non-overlapping SMTC). Optionally, the terminal device may determine, depending on whether the SMTCs corresponding to the FR1 SCell overlap the SMTCs corresponding to the FR2 SCell, whether to preferentially search the FR1 SCell or the FR2 SCell. In a possible implementation, if the terminal device determines that the SMTCs corresponding to the FR2 SCell overlap (partially or completely overlap) SMTCs corresponding to at least one of the N1 FR1 SCells in time domain, the terminal device determines that the FR1 SCell or the FR2 SCell may be preferentially searched. Otherwise, the terminal device determines that the FR1 SCell and the FR2 SCell may be searched in parallel based on a non-overlapping SMTC. In another possible implementation, if the terminal device determines that a part of the SMTCs corresponding to the FR2 SCell do not overlap the SMTCs corresponding to at least one of the N1 FR1 SCells in time domain or none of the SMTCs corresponding to the FR2 SCell overlaps the SMTCs corresponding to at least one of the N1 FR1 SCells in time domain, the terminal device determines that the FR1 SCell and the FR2 SCell may be searched in parallel based on the non-overlapping SMTC. Otherwise, the terminal device determines to preferentially search the FR1 SCell or the FR2 SCell.

The actions of the terminal device or the network device in steps S401 and S402 may be performed by the processor 301 shown in FIG. 3 by invoking the application program code stored in the memory 303, to instruct the terminal device or the network device to perform the actions.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the terminal device in the foregoing method embodiment, an apparatus including the foregoing terminal device, or a component applicable to the terminal device. Alternatively, the communication apparatus may be the network device in the foregoing method embodiment, an apparatus including the foregoing network device, or a component applicable to the network device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in the form of hardware, or may be implemented in the form of a software functional module. It should be noted that, in embodiments of this application, module division is an example, and is merely a logical function division. In actual implementation, another division manner may be used.

FIG. 8 is a diagram of a structure of a communication apparatus 800. The communication apparatus 800 includes a transceiver module 801 and a processing module 802. The transceiver module 801 may also be referred to as a transceiver unit, and is configured to implement receiving and sending functions. For example, the transceiver module 801 may be a transceiver circuit, a transceiver machine, a transceiver, or a communication interface.

An example in which the communication apparatus 800 is the terminal device in the foregoing method embodiment is used. The transceiver module 801 is configured to receive first information, where the first information indicates to activate a plurality of secondary cells, the plurality of secondary cells include one FR2 secondary cell and N1 FR1 secondary cells that need to be searched, and N1 is a positive integer. The processing module 802 is configured to determine, based on the first information, a time domain resource used for searching the FR2 secondary cell.

All related content of the steps in the foregoing method embodiment may be cited in function descriptions of the corresponding functional modules. Details are not described herein again.

In this embodiment, the communication apparatus 800 is presented in the form of dividing various functional modules in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the communication apparatus 800 may be in the form of the communication apparatus shown in FIG. 3.

Specifically, functions/implementation processes of the transceiver module 801 and the processing module 802 in FIG. 8 may be implemented by the processor 301 in FIG. 3 by invoking the computer-executable instructions stored in the memory 303. Alternatively, functions/implementation processes of the processing module 802 in FIG. 8 may be implemented by the processor 301 in FIG. 3 by invoking the computer-executable instructions stored in the memory 303. Functions/implementation processes of the transceiver module 801 in FIG. 8 may be implemented through the communication interface 304 in FIG. 3.

FIG. 9 is a diagram of a structure of another communication apparatus 900. The communication apparatus 900 includes a transceiver module 901. The transceiver module 901 may also be referred to as a transceiver unit, and is configured to implement receiving and sending functions. For example, the transceiver module 901 may be a transceiver circuit, a transceiver machine, a transceiver, or a communication interface.

An example in which the communication apparatus 900 is the network device in the foregoing method embodiment is used. The transceiver module 901 is configured to send first information, where the first information indicates to activate a plurality of secondary cells, the plurality of secondary cells include one FR2 secondary cell and N1 FR1 secondary cells that need to be searched, and N1 is a positive integer; and the first information is further used for determining a time domain resource used for searching the FR2 secondary cell.

All related content of the steps in the foregoing method embodiment may be cited in function descriptions of the corresponding functional modules. Details are not described herein again.

In this embodiment, the communication apparatus 900 is presented in the form of dividing various functional modules in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the communication apparatus 900 may be in the form of the communication apparatus shown in FIG. 3.

Specifically, functions/implementation processes of the transceiver module 901 in FIG. 9 may be implemented by the processor 301 in FIG. 3 by invoking the computer-executable instructions stored in the memory 303. Alternatively, functions/implementation processes of the transceiver module 901 in FIG. 9 may be implemented through communication interface 304 in FIG. 3.

Because the communication apparatus 500 and the communication apparatus 900 provided in embodiments may perform the cell activation method, for technical effects that can be achieved by the communication apparatus 900, refer to the foregoing method embodiment. Details are not described herein again.

It should be noted that one or more of the foregoing modules or units may be implemented by using software, hardware, or a combination thereof. When any one of the foregoing modules or units is implemented by software, the software exists in the form of a computer program instruction, and is stored in the memory. The processor may be configured to execute the program instruction and implement the foregoing method procedure. The processor may be built into a SoC (system on chip) or an ASIC, or may be an independent semiconductor chip. In addition to a core that is configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a special logic operation.

When the foregoing modules or units are implemented by using hardware, the hardware may be any one or any combination of a CPU, a microprocessor, a digital signal processor (digital signal processor, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including at least one processor and an interface, where the at least one processor is coupled to a memory by using an interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete component. This is not specifically limited in this embodiment of this application.

All or some of the foregoing embodiments may be implemented by using software, hardware, firmware, or any combination thereof. When a software program is used to implement embodiments, embodiments may be implemented completely or partially in the form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. In this way, this application is intended to cover these modifications and variations of this application provided that they fall within the scope of the claims of this application and their equivalent technologies.

**Claims**

1. A cell activation method, wherein the method comprises:

   receiving first information, wherein the first information indicates to activate a plurality of secondary cells, the plurality of secondary cells comprise one FR2 secondary cell and N1 FR1 secondary cells that need to be searched, and N1 is a positive integer; and
   determining, based on the first information, a time domain resource used for searching the FR2 secondary cell.

2. The method according to claim 1, wherein duration needed for activating the FR2 secondary cell comprises first duration and second duration, the first duration is duration needed for activating the FR2 secondary cell when a to-be-activated secondary cell is the FR2 secondary cell, the second duration is related to duration needed for searching N2 FR1 secondary cells, and N2 is a positive integer less than or equal to N1.

3. The method according to claim 2, wherein

   the second duration is duration needed for completing search on the N2 FR1 secondary cells; or
   the second duration is duration needed for completing search on an FR1 secondary cell with longest duration needed for completing search in the N2 FR1 secondary cells.

4. The method according to claim 2 or 3, wherein N2 is less than or equal to a first preset threshold; or the second duration is less than or equal to a second preset threshold.

5. The method according to any one of claims 2 to 4, wherein measurement windows SMTCs of the FR1 secondary cells overlap an SMTC of the FR2 secondary cell in time domain.

6. The method according to claim 1, wherein duration needed for activating the FR2 secondary cell is first duration, and the first duration is duration needed for activating the FR2 secondary cell when a to-be-activated secondary cell is the FR2 secondary cell.

7. The method according to claim 6, wherein duration needed for activating the FR1 secondary cells comprises third duration and fourth duration, the third duration is duration needed for activating the FR1 secondary cells when to-be-activated secondary cells are the N1 FR1 secondary cells, and the fourth duration is related to duration needed for searching the FR2 secondary cell.

8. The method according to claim 7, wherein the fourth duration is less than or equal to a third preset threshold.

9. The method according to claim 8, wherein the third preset threshold is a value of preset duration, or the third preset threshold is duration corresponding to a preset quantity of SMTCs of the FR2 secondary cell.

10. The method according to claim 6, wherein none of SMTCs of the N1 FR1 secondary cells overlaps an SMTC of the FR2 secondary cell in time domain.

11. The method according to claim 10, wherein duration needed for activating the FR1 secondary cells is third duration, and the third duration is duration needed for activating the FR1 secondary cells when to-be-activated secondary cells are the N1 FR1 secondary cells.

12. The method according to any one of claims 1 to 11, wherein the method further comprises:

receiving second information, wherein the second information indicates a secondary cell to be activated preferentially; and
activating the FR2 secondary cell and the N1 FR1 secondary cells based on the first information and the second information.

13. The method according to claim 12, wherein duration needed for activating the FR2 secondary cell when the second information indicates that the secondary cell to be activated preferentially is the FR2 secondary cell is first duration, and the first duration is duration needed for activating a single secondary cell when the to-be-activated secondary cell is the single secondary cell.

14. The method according to claim 12, wherein duration needed for activating the FR2 secondary cell when the second information indicates that the secondary cell to be activated preferentially is the FR1 secondary cell comprises first duration and second duration, the first duration is duration needed for activating a single secondary cell when the to-be-activated secondary cell is the single secondary cell, the second duration is related to duration needed for searching N2 FR1 secondary cells, and N2 is a positive integer less than or equal to N1.

15. The method according to claim 12, wherein that the second information indicates the secondary cell to be activated preferentially comprises: the second information indicates priorities respectively corresponding to the FR2 secondary cell and the FR1 secondary cells; and
activating the FR2 secondary cell and the FR1 secondary cells based on the first information and the second information comprises:
performing cell search on the FR2 secondary cell and the N1 FR1 secondary cells based on a sequence of the priorities indicated by the second information.

16. The method according to claim 1, wherein
duration needed for activating the FR2 secondary cell when an SMTC of the FR2 secondary cell partially overlaps SMTCs of the FR1 secondary cells is determined based on an SMTC that is of the FR2 secondary cell and that overlaps none of the SMTCs of the N1 FR1 secondary cells.

17. The method according to any one of claims 1 to 16, wherein the FR2 secondary cell is an FR2 secondary cell configured with a physical uplink control channel.

18. A cell activation method, wherein the method comprises:

sending first information, wherein the first information indicates to activate a plurality of secondary cells, the plurality of secondary cells comprise one FR2 secondary cell and N1 FR1 secondary cells that need to be searched, and N1 is a positive integer; and
the first information is further used for determining a time domain resource used for searching the FR2 secondary cell.

19. The method according to claim 18, wherein duration needed for activating the FR2 secondary cell comprises first duration and second duration, the first duration is duration needed for activating the FR2 secondary cell when a to-be-activated secondary cell is the FR2 secondary cell, the second duration is related to duration needed for searching N2 FR1 secondary cells, and N2 is a positive integer less than or equal to N1.

20. The method according to claim 19, wherein

the second duration is duration needed for completing search on the N2 FR1 secondary cells; or
the second duration is duration needed for completing search on an FR1 secondary cell with longest duration needed for completing search in the N2 FR1 secondary cells.

21. The method according to claim 19 or 20, wherein N2 is less than or equal to a first preset threshold; or the second duration is less than or equal to a second preset threshold.

22. The method according to any one of claims 19 to 21, wherein measurement windows SMTCs of the FR1 secondary cells overlap an SMTC of the FR2 secondary cell in time domain.

23. The method according to claim 18, wherein duration needed for activating the FR2 secondary cell is first duration, and the first duration is duration needed for activating the FR2 secondary cell when a to-be-activated secondary cell is the FR2 secondary cell.

24. The method according to claim 23, wherein duration needed for activating the FR1 secondary cells comprises third duration and fourth duration, the third duration is duration needed for activating the FR1 secondary cells when to-be-activated secondary cells are the N1 FR1 secondary cells, and the fourth duration is related to duration needed for searching the FR2 secondary cell.

25. The method according to claim 24, wherein the fourth duration is less than or equal to a third preset threshold.

26. The method according to claim 25, wherein the third preset threshold is a value of preset duration, or the third preset threshold is duration corresponding to a preset quantity of SMTCs of the FR2 secondary cell.

27. The method according to claim 23, wherein none of SMTCs of the N1 FR1 secondary cells overlaps an SMTC of the FR2 secondary cell in time domain.

28. The method according to claim 27, wherein duration needed for activating the FR1 secondary cells is third duration, and the third duration is duration needed for activating the FR1 secondary cells when to-be-activated secondary cells are the N1 FR1 secondary cells.

29. The method according to any one of claims 18 to 28, wherein the method further comprises:
sending second information, wherein the second information indicates a secondary cell to be activated preferentially.

30. The method according to claim 29, wherein duration needed for activating the FR2 secondary cell when the second information indicates that the secondary cell to be activated preferentially is the FR2 secondary cell is first duration, and the first duration is duration needed for activating a single secondary cell when the to-be-activated secondary cell is the single secondary cell.

31. The method according to claim 29, wherein duration needed for activating the FR2 secondary cell when the second information indicates that the secondary cell to be activated preferentially is the FR1 secondary cell comprises first duration and second duration, the first duration is duration needed for activating a single secondary cell when the to-be-activated secondary cell is the single secondary cell, the second duration is related to duration needed for searching N2 FR1 secondary cells, and N2 is a positive integer less than or equal to N1.

32. The method according to claim 29, wherein that the second information indicates the secondary cell to be activated preferentially comprises: the second information indicates priorities respectively corresponding to the FR2 secondary cell and the FR1 secondary cells.

33. The method according to claim 18, wherein
duration needed for activating the FR2 secondary cell when an SMTC of the FR2 secondary cell partially overlaps SMTCs of the FR1 secondary cells is determined based on an SMTC that is of the FR2 secondary cell and that overlaps none of the SMTCs of the N1 FR1 secondary cells.

34. The method according to any one of claims 18 to 33, wherein the FR2 secondary cell is an FR2 secondary cell configured with a physical uplink control channel.

**35.** A communication apparatus, wherein the communication apparatus comprises a processor, the processor is configured to execute instructions stored in a memory, and when the instructions are run by the processor, the communication apparatus is enabled to perform the method according to any one of claims 1 to 17.

**36.** A communication apparatus, wherein the communication apparatus comprises a processor, the processor is configured to execute instructions stored in a memory, and when the instructions are run by the processor, the communication apparatus is enabled to perform the method according to any one of claims 18 to 34.

**37.** A computer-readable storage medium, wherein the computer-readable storage medium stores instructions, and when the instructions are executed by a computer, the method according to any one of claims 1 to 17 is performed, or the method according to any one of claims 18 to 34 is performed.

**38.** A computer program product, wherein the computer program product comprises instructions, and when the instructions are executed by a computer, the method according to any one of claims 1 to 17 is performed, or the method according to any one of claims 18 to 34 is performed.

FIG. 1

FIG. 2

300    301    303

Processor
CPU 0
CPU 1

Memory

Communication
line 302

Communication
interface

Output
device

Input
device

304    305    306

FIG. 3

Terminal
device

Network
device

S401: First information, indicating to activate a
plurality of secondary cells, where the plurality of
secondary cells include one FR2 secondary cell
and N1 FR1 secondary cells that need to be
searched

S402: Determine, based on the first
information, a time domain resource
used for searching the FR2
secondary cell

FIG. 4

40 ms

20 ms

SMTC

SSB SSB SSB SSB SSB SSB SSB

FIG. 5

FIG. 6

FIG. 7

FIG. 8

FIG. 9

## INTERNATIONAL SEARCH REPORT

| International application No. |
|---|
| **PCT/CN2024/089153** |

**A.    CLASSIFICATION OF SUBJECT MATTER**

H04W72/0446(2023.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; 3GPP: 辅小区, 激活, 频带2, 频带1, 搜索, 小区, 资源, 时域, SCELL, active, FR2, FR1, search, cell, resource, time domain

**C.    DOCUMENTS CONSIDERED TO BE RELEVANT**

| Category* | Citation of document, with indication, where appropriate, of the relevant passages | Relevant to claim No. |
|---|---|---|
| PX | WO 2024031393 A1 (BEIJING XIAOMI MOBILE SOFTWARE CO., LTD.) 15 February 2024 (2024-02-15)<br>description, page 5, paragraph 4-page 16, paragraph 2 | 1-38 |
| X | CN 114982329 A (ALCATEL-LUCENT SHANGHAI BELL CO., LTD. et al.) 30 August 2022 (2022-08-30)<br>description, paragraphs [0029]-[0101] | 1-38 |
| X | CN 113259967 A (MEDIATEK SINGAPORE PTE. LTD.) 13 August 2021 (2021-08-13)<br>description, paragraphs [0024]-[0149] | 1-38 |
| A | CN 111771402 A (HUAWEI TECHNOLOGIES CO., LTD.) 13 October 2020 (2020-10-13)<br>entire document | 1-38 |
| A | US 2021014848 A1 (DAVYDOV Alexei et al.) 14 January 2021 (2021-01-14)<br>entire document | 1-38 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 June 2024** | **22 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/089153**

| Patent document cited in search report | | | Publication date (day/month/year) | Patent family member(s) | | | Publication date (day/month/year) |
|---|---|---|---|---|---|---|---|
| WO | 2024031393 | A1 | 15 February 2024 | CN | 117859356 | A | 09 April 2024 |
| CN | 114982329 | A | 30 August 2022 | WO | 2022082728 | A1 | 28 April 2022 |
| CN | 113259967 | A | 13 August 2021 | US | 2021251040 | A1 | 12 August 2021 |
| CN | 111771402 | A | 13 October 2020 | CN | 111771402 | B | 10 December 2021 |
| US | 2021014848 | A1 | 14 January 2021 | US | 11671954 | B2 | 06 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310472361